# EUROPEAN PATENT APPLICATION

(11) **EP 4 825 626 A1**
(43) Date of publication of application: **21.10.2026**
(21) Application number: 26170128.8
(22) Date of filing: 01.04.2026
(51) Int. Cl.: B60K 6/387, B60K 6/40, B60K 6/442, B60K 6/448, B60K 6/50, B60K 6/52, B60K 6/547, B60W 10/02, B60W 10/06, B60W 10/08, B60W 10/10, B60W 10/11, B60W 10/111, B60W 10/119, B60W 10/26, B60W 10/30, B60W 20/10, B60W 20/15, B60W 20/19, B60W 20/40, B60W 30/19

(54) **IMPROVIDED HYBRID-ELECTRIC POWERTRAIN ASSEMBLY FOR A WORK VEHICLE AND CONTROL METHOD THEREOF**

(30) Priority: 14.04.2025 IT 202500008247
(71) Applicant: CNH Industrial Italia S.p.A., 10156 Torino (IT)
(72) Inventor: Borghi, Alberto, 10156 Turin (IT); Zanasi, Nicholas, 10156 Turin (IT); Inversani, Alessio, 10156 Turin (IT); Forte, Michelantonio, 10156 Turin (IT); Greco Lucchino, Stefano, 10156 Turin (IT)
(74) Representative: CNH Industrial IP Department

(57) **Abstract**

A method for controlling a semi powershift hybrid drivetrain assembly (6) of a work vehicle (1), the hybrid drivetrain assembly comprising a stepped mechanical transmission (8) and an electric transmission (45) provided with an electric generator (46) carried by the internal combustion engine (5) to receive the torque transmitted by this latter and transform such torque in electrical energy; and an electric motor (52) operatively connected to the front drive axle (42) of the work vehicle (1) and configured to impart a torque to an output shaft (4); the proposed method comprises to provide torque with the electric motor during the shift between two speed ratios, thereby allowing to provide torque to the drive axles (40, 42) of the work vehicle (1) in a continuous and seamless manner, thereby reproducing the behavior of a continuously variable transmission.

## Description

### TECHNICAL FIELD

The invention concerns a hybrid-electric powertrain assembly for a work vehicle, in particular an agricultural vehicle such as a tractor, and the control method thereof.

The present invention finds its preferred, although not exclusive, application in a hybrid-electric powershift powertrain assembly for a tractor or other similar agricultural vehicle. Reference will be made to this application by way of example below.

### BACKGROUND OF THE INVENTION

Transmissions for work vehicles such as agricultural vehicles may be provided with different configurations, such as:
- manual shifted transmissions, in which all gears of the transmissions are engaged directly by the driver through lever mechanisms that command clutches, synchronizers, and dog clutches to select the gear;
- semi-power shift transmission, in which some gears are engaged in power shift mode, i.e. by swapping the torque by a couple of clutches, and other gears are actuated like in manual shifted transmissions; and
- full power shift transmission, in which all gears of the transmission are engaged in power shift mode, and
- continuous variable transmissions (CVT), in which the transmission ratio is varied in a continuous and seamless manner.

As per se known, a great advantage of manual shifted, semi powershift and full powershift transmission is great efficiency, since the torque is transmitted by means of transmission shafts and gears mechanically engaged to each other.

However, the shifting between gears entails an interruption of the torque transmission for a predetermined time. Such interruption clearly leads to a deceleration of the vehicle and furthermore causes jerks that reduce the comfort of the driver.

On the other hand, in continuous variable transmissions, the transmission ratio is varied in a seamless manner throughout the entire transmission range of the vehicle. This clearly improves the comfort and the user experience of the driver.

A common configuration of such continuous variable transmissions is hydro-mechanical power split transmission, provided with two parallel torque-transferring paths:
- a mechanical path provided with a stepped transmission, and
- a hydrostatic path provided with a hydrostatic transmission comprising a hydrostatic pump driven by the internal combustion engine and a hydrostatic motor.

Such hydro-mechanical power split transmissions further comprise a planetary gear train coupling the mechanical path and the hydrostatic path.

Unfortunately, due to the double conversion of the energy between mechanical to hydraulic performed by the hydrostatic pump and then hydraulic to mechanical performed by the hydrostatic motor, the efficiency of such hydro-mechanical power split transmission is limited, with the obvious drawbacks that this entails.

Therefore, the need is felt for improvements in the field of vehicular transmissions, in particular by providing a powertrain assembly with improved efficiency and user experience.

An object of the invention is to satisfy such a need in a cost effective and optimized manner.

### SUMMARY OF THE INVENTION

The aforementioned aim is reached by a powertrain assembly and by a method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of the architecture of a work vehicle comprising a powertrain assembly according to the present invention, with parts removed for clarity,
- Figure 2 is the schematic representation, with increased detail, of the powertrain assembly represented in Figure 1, with parts removed for clarity.

### DETAILED DESCRIPTION OF THE INVENTION

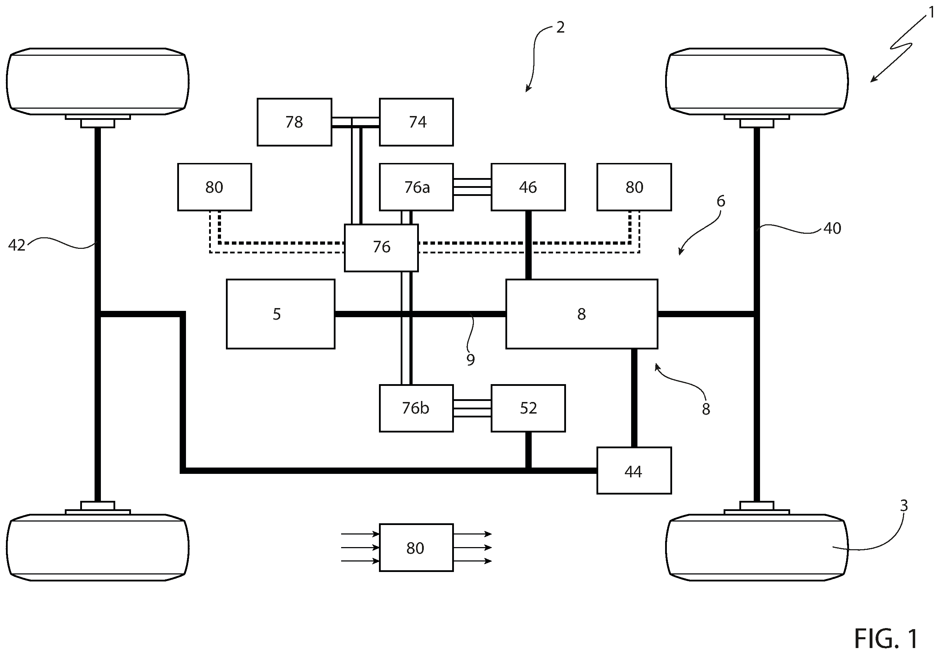

With reference to Figure 1, number 1 schematically denotes as a whole a work vehicle, in particular an agricultural vehicle such as a tractor.

As known, work vehicle 1 comprises a powertrain assembly 2 configured to provide torque to ground resting means 3, such as wheels or tracks, to allow motion of the work vehicle 1 on the ground.

Powertrain assembly 2 comprises an internal combustion engine 5, for example a diesel powered, or a methane powered internal combustion engine.

As explained more in detail in the following, powertrain assembly 2 has a hybrid-electric configuration, in particular a power-split hybrid-electric configuration, even more in particular a parallel hybrid-electric configuration.

In addition, powertrain assembly 2 comprises a drivetrain assembly 6 operatively interposed between internal combustion engine 5 and an output shaft 4 preferably connected to at least one drive axle of work vehicle 1 and ground resting means 3, in order to transmit to these latter the torque provided by internal combustion engine 5.

For example, output shaft 4 may be connected to the rear drive axle 40 of work vehicle 1 to drive the rear wheels 3.

In addition, output shaft 4 may be selectively connectable to a front drive axle 42 of work vehicle 1, to drive the front wheels 3.

More in detail, drivetrain assembly 6 may comprise clutch means 44 operatively interposed between output shaft 4 and front drive axle 42 and configured to selectively connect these latter.

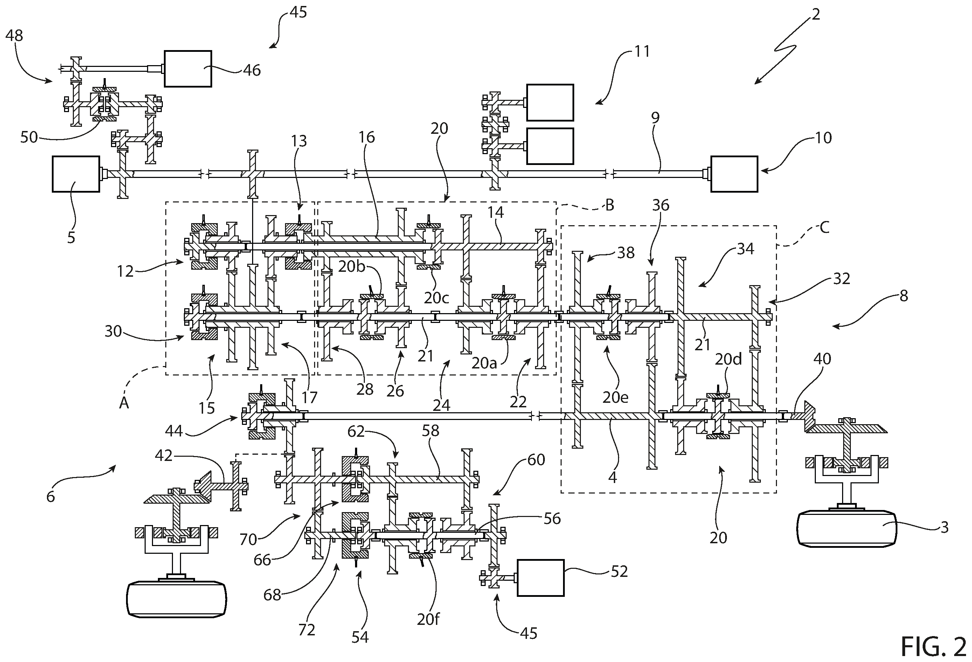

With reference to the exemplary embodiment illustrated in Figure 1 and 2, drivetrain assembly 5 comprises a mechanical portion or mechanical transmission 8 interposed between internal combustion engine 5 and ground resting means 3.

As per se known and shown in Figure 2, internal combustion engine 5 is advantageously connected to an input shaft 9 of the transmission 8 via a damper (not shown) interposed between an output shaft of internal combustion engine 5 and the input shaft 9 of the transmission 8. As always known, the input shaft 8 passes through transmission 8 to be used by other elements of the vehicle, such as a power take off module 10, hydraulic utilities 11 or the like.

With reference to Figure 2, transmission 8 is preferably a mechanical stepped transmission, with a plurality of different gear ratios selectively engageable.

More in detail, transmission 8 is preferably a semi power-shift transmission, for example a dual-clutch or a multi-clutch semi power-shift transmission.

Transmission 8 preferably comprises, in series one with respect to the other, an input stage A, a gear ratio stage B, a range gear ratio stage C.

Input stage A may be realized in different manner to provide torque to a forward clutch (not illustrated) and in a reversed direction to a rearward clutch (not illustrated), both of which may be carried by the transmission input shaft 9. As per se known, and therefore not described in detail, forward clutch and rearward clutch selectively couple the internal combustion engine 5 with output shaft 4, in order to allow respectively forward and rearward motion of work vehicle 1.

In addition, input stage A is preferably made as a power-shift, and it preferably comprises a first clutch 12, hereinafter "even clutch", and a second clutch 13, hereinafter "odd clutch".

Even clutch 12 is configured to couple a first auxiliary shaft 14, hereinafter "even shaft", with input shaft 9, preferably by means of a gearing 15.

Odd clutch 13 is configured to couple a second auxiliary shaft 16, hereinafter "odd shaft" with input shaft 9, preferably by means of a gearing 17.

Even clutch 12 and odd clutch 13 are selectively actuated by respective actuators, as per se known.

With reference to the example illustrated in Figure 2, even shaft 14 and odd shaft 16 preferably comprise each a plurality of selection elements, e.g. double synchronizers, dog clutches or joint clutches 20, carried by the respective shafts 14, 16.

Preferably, transmission 8 further comprises an intermediate shaft 21 operatively interposed between gear ratio stage B, a range gear ratio stage C.

In addition, gear ratio stage B preferably comprises a plurality of gears operatively interposed respectively even shaft 14 and intermediate shaft 21 or odd shaft 16 and intermediate shaft 21 and configured to define different transmission ratio to each other.

For example, gear ratio stage B may comprise four different gears.

With reference to the exemplary embodiment illustrated in Figure 2, gear ratio stage B may comprise a gear 22 and a gear 24 interposed between even shaft 14 and intermediate shaft 21.

Gears 22 and 24 may comprise each a first toothed wheel fixedly carried by even shaft 14 and a second toothed wheel carried in a free rotatable manner by intermediate shaft 21 and engaging with the respective first toothed wheel.

Selections elements 20 may comprise a selection element 20a, in particular a dog clutch carried by intermediate shaft 21 and configured to selectively couple the second toothed wheel of gear 22 or 24 with intermediate shaft 21.

In addition, gear ratio stage B may further comprise a gear 26 and a gear 28 interposed between even shaft 14 and intermediate shaft 21.

Gears 26 and 28 may comprise each a first toothed wheel fixedly carried by odd shaft 16 and a second toothed wheel carried in a free rotatable manner by intermediate shaft 21 and engaging with the respective first toothed wheel.

Selections elements 20 may comprise selection element 20b, in particular a dog clutch, carried by intermediate shaft 21 and configured to selectively couple the second toothed wheel of gear 26 or 28 with intermediate shaft 21.

With reference to the example illustrated in Figure 2, odd shaft 16 is preferably carried in a free rotatable manner by even shaft 14. More in detail, odd shaft 16 is preferably fitted in a free rotatable manner on even shaft 14.

Selection elements 20 may further comprise a selection element 20c, in particular a dog clutch, operatively interposed between even shaft 14 and odd shaft 16 and configured to selectively couple even shaft 14 with odd shaft 16, thereby allowing to double the number of resulting transmission ratio obtainable.

As illustrated in Figure 2, gear ratio stage B preferably further comprises a jump clutch 30, which is configured to couple the intermediate shaft 21 with input shaft 9, to provide an additional gear ratio between input shaft 9 and output saft 4.

With reference to the exemplary embodiment illustrated in Figure 2, range gear ratio stage C is preferably configured to couple intermediate shaft 21 with output shaft 4 by choosing between a plurality of gear ratios, which are multiplied by the above-described gear ratios of the gear ratio stage B.

More in detail, range gear ratio stage C preferably comprises four range gears having a different gear ratios and configured to be selectively coupled to output shaft 4 shaft by means of the respective dog clutches 20.

In this way, the transmission 1 of the provided exemplarily embodiment may provide up to thirty-six possible gear ratios, due to the nine gear ratios repeated over the four range ratios.

With reference to the exemplary embodiment illustrated in Figure 2, range gear ratio C preferably comprises four range gears 32 (slow range), 34 (medium II range), 36 (medium I range) and 38 (fast range) operatively interposed between intermediate shaft 21 and output shaft 4.

In the illustrated example, gears 32 and 34 may comprise each a first toothed wheel fixedly carried by intermediate shaft 21 and a second toothed wheel carried in a free rotatable manner by output shaft 4 and engaging with the respective first toothed wheel.

Selections elements 20 may comprise a selection element 20d, in particular a dog clutch, carried by output shaft 4 and configured to selectively couple the second toothed wheel of gear 32 or 34 with the same output shaft 4.

Vice-versa, gears 36 and 38 may comprise each a first toothed wheel carried in a free rotatable manner by intermediate shaft 21 and a second toothed wheel fixedly carried by output shaft 4 and engaging with the respective first toothed wheel.

Selections elements 20 may comprise a selection element 20e, in particular a dog clutch, carried by intermediate shaft 21 and configured to selectively couple the first toothed wheel of gear 36 or 38 with the same intermediate shaft 21.

According to the preferred embodiment of the present invention, drivetrain assembly 6 comprises an electric portion or electric transmission 45. Electric transmission 45 is preferably configured to be arranged in parallel to transmission 8, and is preferably configured to be operatively interposed between internal combustion engine 5 and ground resting means 3.

In particular, electric transmission 45 is preferably configured to be coupled to rear drive axle 40 and/or to front drive axle 42.

In the illustrated example, electric transmission 45 is operatively coupled to front drive axle 42.
Electric transmission 45 preferably comprises a first electric machine 46 carried by internal combustion engine 5. More in detail, first electric machine 46 is preferably connected to internal combustion engine 5 by means of transmission means 48 and is preferably configured to operate as an electric generator, transforming the mechanical energy provided by internal combustion engine 5 into electric energy.

Transmission means 48 preferably comprises clutch means 50 configured to selectively connect first electric machine 46 to internal combustion engine 5.

In addition, electric transmission 45 comprises a second electric machine 48, which is electrically connected to first electric machine 46 and is mechanically connected to a drive axle of work vehicle.

More in detail, second electric machine 48 is preferably connected to front drive axle 42.

In addition or alternative, second electric machine 48 may be connected to rear drive axle 40.

Second electric machine 48 may operate as an electric motor, to provide torque to ground resting means 3, or it may operate as an electric generator, absorbing mechanical energy and producing electric energy for a later use, for instance during work vehicle deceleration and/or braking or during the deceleration of an implement connected to work vehicle 1.

With reference to the exemplary embodiment illustrated in Figure 2, second electric machine 48 is preferably connected to the drive axle of work vehicle 1 by means of a transmission assembly 54 configured to provide a plurality of different gear ratios selectively engageable.

More in detail, transmission assembly is preferably configured to define three different gear ratios, namely a slow gear ratio, a medium gear ratio and a fast gear ratio.

With reference to the exemplary embodiment illustrated in Figure 2, transmission assembly 54 preferably comprises a first auxiliary shaft 56 connected to second electric machine 52, a second auxiliary shaft 58 configured to be connected to the drive axle of work vehicle 1, in particular the front drive axle 42, a plurality of gears interposed between first 56 and second auxiliary shaft 58 and selection elements configured to selectively engage one of said gears.

More in detail, transmission assembly 54 preferably comprises at least a first gear 60 and a second gear 62.

First gear 60 and second gear 62 preferably comprises each a first toothed wheel carried in a free rotatable manner by first auxiliary shaft 56 and a second toothed wheel fixedly carried by second auxiliary shaft 58 and engaging with the respective first toothed wheel.

In addition, selection elements 20 may comprise a selection element 20f, in particular a dog clutch, carried by first auxiliary shaft 56 and configured to selectively couple the second toothed wheel of gear 60 or 62 with first auxiliary shaft 56.

Preferably, transmission assembly 54 further comprises clutch means 66 operatively interposed between second auxiliary shaft 58 and the drive axle of work vehicle 1, in particular to front drive axle 42, to selectively couple second auxiliary shaft to this latter.

With reference to the exemplary embodiment illustrated in Figure 2, transmission assembly 54 preferably comprises a third auxiliary shaft 68, which is connected to the drive axle of work vehicle 1, in particular to front drive axle 42 by means of a gear 70 configured to define a different transmission ratio with respect to gears 60 and 62.

In addition, transmission assembly 54 further comprises clutch means 72 operatively interposed between first auxiliary shaft 56 and third auxiliary shaft 68, to selectively couple these latter.

As per se known, and therefore not described in detail, clutches 12, 13, 30, 44, 66 and/or 68 may be actuated by respective actuators, for example hydraulic actuator controlled by electronically controlled valves.

Similarly, selection elements 20 may be actuated by respective actuators, for example hydraulic actuator controlled by electronically controlled valves.

According to the preferred embodiment of the present invention, electric transmission 45 preferably comprises an electric energy storage system 74, in the following referred to also as "accumulator means" 74, that is electrically connected to first 46 and second electric machine 52.

Preferably, accumulator means 74 comprise a battery pack, for example a lithium-ion battery pack.

Accumulator means 74 are configured to store the electric energy provided by first electric machine 46, second electric machine 52 and/or an external power grid.

In addition, electric portion preferably comprises power management means 76, in the following referred to also as power distribution unit or PDU 76, that are electrically connected to accumulator means 74 and to first 46 and to second electric machine 52 and are configured to manage the electric energy transfer among them.

Preferably, the connection of PDU 76 with first electric machine 46 and second electric machine 52 is realized via inverters 76a and 76b that are operatively connected respectively to first electric machines 46 and to second electric machine 52.

With reference to the exemplary embodiment illustrated in Figure 1, PDU 76 preferably comprises also an energy converter 78, in particular a DC/DC energy converter electrically connected to accumulator means 74 and configured to convert the voltage levels to and from the accumulator means 74.

Preferably, electric portion 45 may further comprise one or more electric connectors 80 that allows to electrically connect the PDU 74 and the accumulator means 74 to external electrical utilities, such as an external power grid, an external electrically powered implement or the like. Electric connectors 80 may be realized for example according to standard ISO 11783 (AEF connectors).

Work vehicle 1 further comprises an electronic control unit 80, which is configured to be electrically connected to the aforementioned actuators of clutches 12, 13, 30, 44, 66 and/or 68 and selection elements 20, to internal combustion engine 5, to PDU 76 and to inverters 76a and 76b and comprises elaboration means configured to control their operation according to the control method described in the following.

Such control method, for instance, may be deployed into a specific computer program, which can be downloaded into the electronic control unit 80 and is configured to be executed by such electronic control unit 80.

More in detail, electronic control unit 80 may comprise processing means and storage means. Storage means may include computer-readable means having stored thereon which include instructions which, when executed by the processing means, causes the same processing means to carry out the control method as described in the following.

Electronic control unit 80 can be either the ECU of the work vehicle 1 or the ECU of drivetrain assembly 6.

The operation of the above-described hybrid-electric drivetrain 6 is the following.

During a standard driving condition of work vehicle 1, supposing that the first gear ratio and the slow range gear ratio are engaged, internal combustion engine 5 provides torque to input shaft 9 that passes via even clutch 12 to even shaft 14 and via gear 22 towards intermediate shaft 21 and then via gear 32 to output shaft 40. In such driving condition, selections elements 20a and 20d are controlled to respectively engage gears 22 and 32.

Supposing that the user wants to switch from the first gear ratio to the second gear ratio, i.e. to engage gear 28, starting from the above condition, then the electronic control unit will control the elements of the drivetrain assembly 6 1 as follow.

In a first phase, the even clutch 12 is disengaged and the second electric machine 52 is controlled to provide the torque that was transmitted to the driving axle of work vehicle 1.

More in detail, during the first phase, even clutch 12 is disengaged, for instance progressively, and the torque provided to output shaft 4 by mechanical transmission 8 decreases and at the same time second electric machine 52 is controlled to increase its output torque, such that the torque transmitted to the drive axles of work vehicle 1 remains constant.

In particular, second electric machine 52 increases, in a smooth way, with an appropriate control strategy e.g. linearly, the torque provided to the drive axle till reaching the value of torque that will be provided by the second gear ratio, if engaged.

Therefore, during such transient phase, there is no torque transmission by mechanical transmission 8 and torque is provided to the ground resting wheels 3 by the electric transmission 40.

More in detail, second electric machine 46 may be controlled in order to maintain constant the acceleration of work vehicle 1, to avoid jerks when even clutch 12 is disengaged.

In other words, during such transient phase, second electric machine 46 may be controlled in order to maintain constant the torque applied to ground resting wheels 3.

Optionally, during such transient phase, if no sufficient energy is present in the accumulator means 74 or as predefined option to not discharge this latter, the internal combustion engine 5 may increase its speed to allow first electric machine 46 to provide energy to second electric machine 52 to achieve its function.

Preferably, selection element 20d is further configured to couple gear 28 with intermediate shaft 21.

Then, in a second phase, second electric machine 52 decreases its output torque while odd clutch 13 is engaged in a smooth, e.g. via a linear slope, thereby passing again to a mechanical transmission of all torque from internal combustion engine 13 to output shaft 4. In such condition the second electric machine 52 is controlled according to the control law of clutch engagement to maintain constant the acceleration of work vehicle 1.

According to the above operation, the present invention is directed to a method of controlling a hybrid drivetrain 6 as described above and comprising the following phases:
i) Controlling internal combustion engine 5 to provide a level of torque T1 to ground resting means 3 via a first gear ratio,
ii) Receiving a request to shift from the first gear ratio to a second gear ratio;
iii) Disengage the clutch that is transmitting torque towards the output shaft 4 and controlling second electric machine 52 to provide the torque level T1 to ground resting means 3, and
iv) Start engaging the second clutch connected to the second gear ratio and at the same time decreasing the torque provided by the second electric machine 52 till all the torque provided to output shaft 4 is provided through the second clutch.

Preferably, step iv) further comprises to control internal combustion engine 5 in order to provide at output the torque level T1 when the second clutch is engaged.

More in detail, step iv) comprises the step of progressively engage the second clutch and simultaneously reduce the output torque provided by second electric machine 52, in order to maintain constant the torque provided to the ground resting wheels 3 during the shift between two gear ratios.

Preferably, the method may further comprise the step of controlling inverter 76a in order to absorb mechanical power from internal combustion engine 5 to allow first electric machine 46 to generate electric energy.

Preferably, during phases iii) and iv), the torque transmitted by second electric machine 52 and internal combustion engine 5 to ground resting wheels 3 is controlled to maintain constant the acceleration of work vehicle 1.

In view of the foregoing, the advantages of a hybrid drivetrain provided with an apparatus configured to carry out the method according to the invention are apparent.

Thanks to the proposed method, it is possible to shift between different gear ratios maintaining constant the torque provided to the ground resting wheels 3, thereby avoiding jerks and increasing the driver's comfort.

In particular, according to the proposed method, it is possible to accelerate and shift between different gear ratios in a smooth and seamless manner, without torque transmission interruption at the wheels 3 during the shift between two different gear ratios. This replies the behavior and the user experience of a CVT, with all the benefits that this entails.

In addition, since in most of the operation conditions, in particular during steady state operation condition, all the torque is transmitted to the wheels 3 via the mechanical transmission 8, it is possible to maximize the efficiency of the drivetrain assembly 6.

Moreover, since second electric machine 52 is connected to the front wheels 3, it is possible to reduce the turning radius of work vehicle 1. This greatly improves the maneuverability and the user experience of the same work vehicle, in particular when it is necessary to perform a U-turn, for example at the end of a field during a plowing or seeding operation.

In addition, the proposed arrangement improves controllability in slippery conditions, since it is possible to control in a very precise manner the torque provided at output by second electric machine 52.

Since in the proposed arrangement, the first electric machine 46 is connected to internal combustion engine 5, in case the state of charge of accumulator means 74 is low, first electric machine 46 can absorb mechanical energy from internal combustion engine 5 to provide electric energy to the same accumulator means 74 or to second electric machine 52. This allows to always be able to perform a return to home functionality, i.e. to avoid risks to remain stranded to due lack of electric energy in the accumulator means 74.

It is clear that modifications can be made to the described apparatus and method which do not extend beyond the scope of protection defined by the claims.

For example, the provided gear ratio stage B and range gear ratio stage C may comprise a different number of gear wheels. Moreover, further shafts or clutches may be present.

## Claims

1. A method for controlling a hybrid drivetrain assembly (6) of a work vehicle (1), the hybrid drivetrain assembly (6) comprising a mechanical transmission (8) provided with:
- an input shaft (9) adapted to be connected to an internal combustion engine (5),
- an output shaft (4) adapted to be connected to at least one drive axle (40, 42) of the work vehicle (1),
- a gear ratio stage (B) and a range gear ratio stage (C) arranged in series to each other between the input shaft (9) and the output shaft (4),
- an intermediate shaft (21) interposed between the gear ratio stage (B) and the range gear ratio stage (C),
said gear ratio module (B) comprising:
- a first shaft (14), a first set of gears (22, 24) connecting said first shaft (14) with said intermediate shaft (21) defining a plurality of different speed ratios, first selection elements (20a) configured to selectively connect one of the gears (22, 24) with the first shaft (14) or the intermediate shaft (21) and a first clutch (12) configured to selectively connect the first shaft (14) with the input shaft (9),
- a second shaft (16) and a second set of gears (26, 28) connecting said second shaft (16) with said intermediate shaft (21) defining a plurality of different speed ratios, second selection elements (20b) configured to selectively connect one of the gears (26, 28) with the second shaft (16) or the intermediate shaft (21) and a second clutch (13) configured to selectively connect the second shaft (16) with the input shaft (9),
said range gear ratio module (C) comprising a plurality of range gears (32, 34, 36, 38) defining a plurality of different speed ratios carried by said intermediate shaft (19) and configured to engage the output shaft (4) and third selection elements (20d, 20f) configured to selectively connect one of the range gears (32, 34, 36, 38) with the intermediate shaft (21) or the output shaft (4),
the hybrid transmission (1) comprising an electric transmission (45) provided with:
- a first electric machine (46) adapted to be carried by said internal combustion engine (5) to receive the mechanical energy provided by this latter and transform such torque in electrical energy;
- a second electric machine (52) adapted to be connected to a drive axle (42) of the work vehicle (1) in order to impart a torque to the drive axle (42);
- electric power management means (76) electrically connected to the first electric machine (46) and to the second electric machine (52), and
- an electric energy storage system (74) electrically connected to the first electric machine (46) and to the second electric machine (52),
said method comprising the following steps:
i) Transmitting a level of torque (T1) to one of the drive axle (42, 44) of said work vehicle (1) via a first speed ratio,
ii) receiving a request to shift from the first speed ratio to a second gear ratio, different from the first speed ratio;
iii) disengaging the clutch (12, 13) that is transmitting torque towards the output shaft (4) and controlling the second electric machine (52) to provide the level of torque (T1) to one of the drive axle (42, 44) of said work vehicle (1), and
iv) start engaging the clutch (12, 13) operatively connected to the second speed ratio and at the same time decreasing the torque provided by the second electric machine (52) till all the torque provided to one of the drive axle (42, 44) is provided by internal through the second clutch (12, 13).

2. Method according to claim 1, wherein the step iv) comprises the step of progressively engage the clutch (12, 13) operatively connected to the second speed ratio simultaneously reduce the output torque provided by the second electric machine (52), in order to maintain constant the level of torque (T1) provided to at least one of the drive axle (42, 44) of work vehicle (1).

3. Method according to claim 1 or 2, wherein said second electric machine (52) is operatively connected to the front axle (42) of said work vehicle (1).

4. Method according to claim 1, 2 or 3, wherein said electric transmission (45) comprises a transmission assembly (54) configured to be interposed between the output shaft of the second electric machine (52) and one drive axle (40, 42) of the work vehicle (1) and configured to provide a plurality of different speed ratios selectively engageable.

5. Method according to claim 4, wherein the transmission assembly (54) comprises:
- a first auxiliary shaft (56) connected to the second electric machine (52),
- a second auxiliary shaft (58) configured to be connected to the drive axle (42) of work vehicle (1),
- a plurality of auxiliary gears (60, 62) interposed between the first auxiliary shaft (56) and the second auxiliary shaft (58), and
selection elements (20f) configured to selectively engage one of said auxiliary gears (60, 62).

6. Method according to claim 5, wherein said transmission assembly (54) further comprises clutch means (66) configured to be operatively interposed between the second auxiliary shaft (58) and the drive axle (42) of work vehicle (1), to selectively couple these latter.

7. Method according to claim 5 or 6, wherein the transmission assembly (54) further comprises a third auxiliary shaft (68) which is adapted to be connected to the drive axle (42) of work vehicle (1) by means of a gear (70) and clutch means (72) operatively interposed between first auxiliary shaft (56) and third auxiliary shaft (68).

8. A hybrid drivetrain assembly (6) for a work vehicle (1), the hybrid drivetrain assembly (6) comprising a mechanical transmission (8) provided with:
- an input shaft (9) adapted to be connected to an internal combustion engine (5),
- an output shaft (4) adapted to be connected to at least one drive axle (40, 42) of the work vehicle (1),
- a gear ratio stage (B) and a range gear ratio stage (C) arranged in series to each other between the input shaft (9) and the output shaft (4),
- an intermediate shaft (21) interposed between the gear ratio stage (B) and the range gear ratio stage (C),
said gear ratio module (B) comprising:
- a first shaft (14), a first set of gears (22, 24) connecting said first shaft (14) with said intermediate shaft (21) defining a plurality of different speed ratios, first selection elements (20a) configured to selectively connect one of the gears (22, 24) with the first shaft (14) or the intermediate shaft (21) and a first clutch (12) configured to selectively connect the first shaft (14) with the input shaft (9),
- a second shaft (16) and a second set of gears (26, 28) connecting said second shaft (16) with said intermediate shaft (21) defining a plurality of different speed ratios, second selection elements (20b) configured to selectively connect one of the gears (26, 28) with the second shaft (16) or the intermediate shaft (21) and a second clutch (13) configured to selectively connect the second shaft (16) with the input shaft (9),
said range gear ratio module (C) comprising a plurality of range gears (32, 34, 36, 38) defining a plurality of different speed ratios carried by said intermediate shaft (19) and configured to engage the output shaft (4) and third selection elements (20d, 20f) configured to selectively connect one of the range gears (32, 34, 36, 38) with the intermediate shaft (21) or the output shaft (4),
the hybrid transmission (1) comprising an electric transmission (45) provided with:
- a first electric machine (46) adapted to be carried by said internal combustion engine (5) to receive the mechanical energy provided by this latter and transform such torque in electrical energy;
- a second electric machine (52) adapted to be connected to a drive axle (42) of the work vehicle (1) in order to impart a torque to the drive axle (42);
- electric power management means (76) electrically connected to the first electric machine (46) and to the second electric machine (52), and
- an electric energy storage system (74) electrically connected to the first electric machine (46) and to the second electric machine (52),
the hybrid-electric drivetrain assembly (6) comprising an electronic control unit (80), which is configured to be electrically connected to said first clutch (12), to said second clutch (13), to said first selection elements (20a), to said second selection elements (20b), to said third selection elements (20d, 20f) and to said electric power management means (76) and comprises elaboration means configured to control their operation according to the control method according to one of the preceding claims.

9. A computer program comprising instructions which, when executed by the electronic control unit (63) of the work vehicle (1) of claim 9, cause said electronic control unit (63) to carry out the method of claims 1 to 7.

10. A computer-readable means having stored thereon the instructions of the computer program of claim 9.
